# EUROPÄISCHE PATENTSCHRIFT

(11) **EP 0 399 989 B1**
(45) Veröffentlichungstag und Bekanntmachung des Hinweises auf die Patenterteilung: **16.06.1993**
(21) Anmeldenummer: 90890117.6
(22) Anmeldetag: 17.04.1990
(51) Int. Cl.: G01D 5/244

(54) **Inkrementales Messsystem**
Incremental measuring system
Dispositif de mesurage incrémental

(30) Priorität: 23.05.1989 AT 1234/89
(43) Veröffentlichungstag der Anmeldung: 28.11.1990
(73) Patentinhaber: RSF-Elektronik Gesellschaft m.b.H., A-5121 Tarsdorf 93 (AT)
(72) Erfinder: Rieder, Heinz, A-5110 Oberndorf (AT); Schwaiger, Max, A-5121 Ostermiething (AT)
(74) Vertreter: Hübscher, Heiner, Dipl.-Ing.

(56) Entgegenhaltungen:
- EP-A- 0 085 161
- CH-A- 407 569
- DE-A- 2 729 697
- DE-A- 3 150 977
- DE-A- 3 714 028

## Beschreibung

Die Erfindung betrifft ein inkrementales Meßsystem, z. B. ein Längenmeßsystem, bei dem durch Abtastung der Meßteilung eines Maßstabes periodische, in ihrer Grundform sinusförmige analoge Meßsignale erzeugt und aus ihnen vorzugsweise über Trigger- und Impulsformerstufen verstellrichtungsabhängige, digitale Zählsignale für eine Auswertungseinrichtung, z. B. eine Anzeige- oder Steuereinrichtung abgeleitet werden, wobei elektronische Einrichtungen zur Fehlerkorrektur, zumindest von Teilungs- oder Montagefehlern des Maßstabes nach einem gespeicherten oder vorgegebenen Korrekturprogramm vorgesehen sind.

Bei inkrementalen Meßsystemen der gegenständlichen Art wird der entsprechend ausgebildete Inkrementalmaßstab nach optoelektronischen, kapazitiven, induktiven oder magnetischen Abtastprinzipien abgetastet, wobei der Auswertung meist zwei um 90° phasenverschobene Meßsignale zugeleitet werden, bei denen in den meisten Fällen die Länge eines Signalzuges einem Teilungsinkrement des Maßstabes entspricht. Bei optisch oder optoelektronisch ablesbaren Inkrementalmaßstäben besteht die Meßteilung vorzugsweise aus gleich breiten Hell- und Dunkelfeldern, die über die gleiche Teilung aufweisende, gegeneinander aber um Teilungsbruchteile versetzte Abtastgitter unter Verwendung zugeordneter Beleuchtungseinrichtungen und photoelektrischer Empfänger abgetastet werden. Für die Erzeugung von zwei Meßsignalen werden vorzugsweise vier, paarweise in Gegenschaltung verbundene photoelektrische Empfänger verwendet.

Aus der CH-A-407 569 ist eine Möglichkeit der elektronischen Unterteilung des Maßstabes durch eine Teilerschaltung bekannt, wobei hier eine Potentiometerschaltung als Teilerschaltung verwendet wird und die Nulldurchgänge bzw. Flankenwechsel des Signales an den einzelnen Potentiometerabgriffen über die Triggerstufen erfaßt werden. Häufig werden Teilerschaltungen verwendet, die eine Verfünffachung der Abtastsignale ergeben, so daß an den einzelnen Triggerstufen - bezogen auf das analoge Meßsignal - alle 18° ein Rechteck-Flankenwechsel erzeugt wird. Durch logische Verknüpfung dieser Signale werden die digitalen Zählsignale erhalten, die verstellrichtungsabhängig einer Zähleinrichtung zugeführt werden. Die Verstellrichtung ergibt sich daraus, daß schon bei den analogen Meßsignalen je nach Verstellrichtung das eine oder andere Signal gegenüber dem zweiten Signal voreilt.

Andere Möglichkeiten der elektronischen Unterteilung des Maßstabes sind durch Schaltungen mit Interpolationsrechnern oder Kombinationen aus Interpolationsrechnern und Zähleinrichtungen verwirklicht worden. Eine entsprechende Konstruktion ist aus der DE-A-27 29 697 bekannt. Bei Interpolationsrechnern erfolgt die Interpolationsberechnung nach der Phasenlage der in einem AD/Wandler in Digitalsignale umgewandelten Meßsignale, wobei über die Digitalsignale die Interpolationswerte nach Speichertabellen ermittelt werden. Um hier Interpolationsfehler zu vermeiden, ist es notwendig, daß die Analogsignale von Gleichstromanteilen befreit sind, gleiche Amplitudenhöhe und gleichen Amplitudenabstand aufweisen. Es werden deshalb vor Anwendung des Interpolationsalgorythmus an den Digitalwerten noch Korrekturen auf Symmetrie, Amplitudengleichheit und 90° Phasenversatz vorgenommen, wobei die Korrekturwerte als Korrekturtabelle im Rechner eingespeichert sind. Die Befreiung vom Gleichstromanteil erfolgt meist durch an sich bekannte paarweise Gegenschaltung von um 180° phasen-verschobenen analogen Meßsignalen. Ein Ausgleich von Positionsfehlern ist bei diesem Meßsystem weder vorgesehen noch möglich.

Bei der Längen- und Winkelmessung treten Fehler auf, die ohne Korrektur das Meßergebnis besonders bei hochgenauen Messungen oder Maschinensteuerungen nachteilig beeinflussen können. Positionsfehler ergeben sich vor allem durch Teilungsfehler der Meßteilung, Montagefehler des Meßsystems an einer zugehörigen Maschine und bzw. oder auch durch Maschinenfehler selbst. Weitere (meist lineare) Meßfehler ergeben sich durch ein unterschiedliches Wärmedehnungsverhalten des die Meßteilung aufweisenden Längenmaßstabes gegenüber dem Maschinenbett und durch nicht exakt parallele Anordnung des Maßstabes gegenüber der zugeordneten Führung einer Maschine.

An elektronischen Korrektureinrichtungen sind einfache Schaltungen bekannt, die den Zählerstand für die Anzeige- oder Steuereinrichtung bei vorgegebenen Zählerständen nach einer gespeicherten Korrekturtabelle korrigieren. Nachteilig dabei ist die jeweils sprunghafte Änderung des Zählerstandes um wenigstens einen Zählschritt am Korrekturpunkt, wobei im Extremfall am Korrekturpunkt bei Richtungsumkehr und neuerlichem Anfahren des Meßpunktes Differenzen um mehrere Zählschritte auftreten können. Wegen dieser Zählersprünge ist keine kontinuierliche Zählweise möglich, so daß für bestimmte Positionen der Abtasteiheit kein äquivalenter (durch fortlaufende Zählung erhaltener) Anzeigewert vorhanden ist. Dies könnte bei entsprechend ausgestatteten Maschinensteuerungen zu entscheidenden Betriebsstörungen führen. Es ist zwar bekannt, zur Beseitigung dieser Nachteile bereits vor dem Eingang der Zählerschaltung, etwa in der Impulsformerstufe,digitale Zählsignale zu unterdrücken oder zusätzlich einzufügen, doch treten auch hier an den Korrekturpunkten Sprünge auf, die Meßungenauigkeiten wenigstens in der Grössenordnung der einem oder mehreren Zählschritten zugeordneten Längeninkremente hervorrufen. Eine Korrektur nach gespeicherten Korrekturwerten und unter Verwendung eines Interpolationsrechners setzt eine entsprechende Ausstattung des Längenmeßsystems mit einem Rechner voraus und kann trotzdem zu Ungenauigkeiten führen.

Da, wie oben erwähnt, bei den meisten in der Praxis eingesetzten elektronischen Korrekturverfahren Meß- bzw. Anzeigeungenauigkeiten in der Größenordnung von wenigstens der einem Zählschritt zugeordneten Längen- oder Winkeleinheit auftreten und in den meisten Fällen entsprechend große Zählsprünge in Kauf genommen werden müssen, werden für genauere Messungen und genauere Korrekturen bisher bevorzugt mechanische Korrektureinrichtungen vorgesehen, bei denen dem Prinzip nach die Abtasteinheit oder das Abtastgitter der Abtasteinheit gegenüber dem Meßfühler über Stelltriebe in Meßrichtung verstellbar ist. Die Stelltriebe tasten in einem Maßstabgehäuse angebrachte, individuell einstellbare Korrekturschablonen ab und stellen die Abtasteinrichtung bzw. das Abtastgitter entsprechend dieser Abtastung vor oder zurück. Entsprechende Korrektureinrichtungen sind aus der DE-C-866 403 und den US-A-3 039 032, US-A-3 182 385, US-A-2 336 550 und US-A-2 985 826 bekannt. Nach der DE-C-2 724 858 wird die abtastbare Korrekturschablone aus einer entlang des Maßstabes angebrachten, an den Gelenken über von außen betätigbare Exzenter einstellbaren Gliederkette gebildet. Bei den beschriebenen mechanischen Korrekturverfahren ist in den einzelnen Bereichen eine stetige Korrektur, im Gegensatz zur sprunghaften Korrektur der bekannten elektronischen Korrektureinrichtungen möglich. Begrenzungen der Korrekturmöglichkeiten sind durch den möglichen Verstellweg der Abtasteinheit bzw. des Gitters gegenüber dem Mitnehmer, insbesondere beim Auftreten größerer linearer Meßfehler und durch die Abstände der Einstellpunkte für die Korrekturschablone gegeben. Die mechanische Korrektur ist äußerst aufwendig, setzt ein wesentlich größeres Gehäuse für das Längenmeßsystem und auch eine relativ große Abtasteinheit mit den notwendigen Stelltrieben und entsprechend großer Masse voraus und kann prinzipiell nur dann eingesetzt werden, wenn das Meßsystem von Haus aus für die Durchführung solcher mechanischer Korrekturen gebaut und ausgelegt wurde. Stufenlose Korrekturen bei linearen Maßstabfehlern lassen sich vorwiegend unter Verwendung von Metallmaßstäben durch Dehnen oder Stauchen des Maßstabkörpers erzielen, doch ergibt sich auch hier ein beträchtlicher Aufwand.

Ein inkrementales Meßsystem nach dem Oberbegriff des Patentanspruches 1 ist aus der DE-A-31 50 977 in der Anwendung bei einer Meßmaschine bekannt. Dabei werden die durch Abtastung einer Meßteilung erhaltenen analogen Meßsignale über Trigger- und Umformerstufen in Zählsignale umgeformt und einem Zähler zugeführt. Zwischen dem Zähler und einer Anzeige- oder Auswerteeinheit ist ein Rechner vorgesehen, der mit einem Speicher verbunden ist und nach einer gespeicherten Korrekturkurve den vom Zähler eingehenden Zählwerten Korrekturwerte zuordnet, die in Form von Multiplikationsfaktoren eingesetzt werden, wobei der Rechner das durch die Multiplikation als korrigierter Meßwert erhaltene Produkt aus Zählerstand und momentanem Korrekturwert auf die Anzeige ausgibt. Der Rechner ist ein Digitalrechner. Es wird zwar eine korrigierte Anzeige erhalten, doch diese stimmt diese nicht mit dem Zählschritt überein und die gesamte Anordnung ist nur bei mit einem aufwendigen Rechner ausgestatteten Meßsystemen auf Meßmaschinen sinnvoll.

Aufgabe der Erfindung ist die Schaffung eines Meßsystems der gegenständlichen Art, bei dem ohne mechanische Veränderung der Maßstabes und der Abtasteinheit im Bedarfsfall auf elektronischem Weg mit einfachen Mitteln Korrekturen vorgenommen werden können, ohne daß an den Korrekturpunkten Zählsprünge oder äquivalente Meßfehler auftreten, wobei, wie bisher nur bei mechanischen Korrektureinrichtungen, jede für die Verarbeitung sinusförmiger analoger Meßsignale geeignete Auswer tungseinrichtung verwendet werden kann, die Einhaltung einer nahezu stufenlosen Korrekturkurve möglich ist, der Korrekturbereich nicht begrenzt ist und die Korrekturen im Bedarfsfall frei programmiert werden können.

Die gestellte Aufgabe wird durch die im Patentanspruch 1 angegebenen Merkmale gelöst.

Bei der erfindungsgemäßen Ausführung kann die Korrektureinrichtung extern angebracht werden, wobei die korrigierten analogen Ausgangssignale so weiter verarbeitet werden, wie sonst die sinusförmigen analogen Meßsignale, die unmittelbar von der Abtasteinheit erhalten werden. Selbstverständlich können die Multiplikationsschaltungen hier auch die sonst meist üblichen Vorverstärker ersetzen. Die weitere Signalverarbeitung kann in der Weise erfolgen, wie sie für das jeweilige Meßsystem vorgesehen ist. Es ist also eine elektronische Maßstabunterteilung durch Teilerketten, aber auch durch Interpolationsrechner möglich. In beiden Fällen wird vorgesehen, daß die durch einen Korrekturschritt erzielte Phasenverschiebung kleiner ist als der durch die elektronische Maßstabunterteilung erhaltene digitale Zählschritt. Bei Verwendung von Interpolationsrechnern können Teile der Rechnerschaltung auch für die teilweise Steuerung der Korrektureinrichtung herangezogen werden. Es ist aber auch eine völlige Trennung von Korrektur- und Auswertungseinrichtung möglich. Der tatsächliche Korrekturschritt erfolgt, wie erwähnt, in nur Bruchteile des Zählschrittes ausmachenden Stufen, wobei sogar bei Verwendung entsprechender Multiplikationsschaltungen ein stetiger Übergang bei der Phasenverschiebung von der einen zur nächsten Korrekturstufe möglich ist. Man kann aber auch die Steuerung der Multiplikationsschaltungen auf die Auswertungs-Zähleinrichtung synchronisieren, so daß der zeitliche Abstand von Zählschritt und Korrekturschritt vorgegeben wird und Zählfehler vermieden werden. Wegen der feinfühligen Korrektur jeweils nur um Bruchteile eines Zählschrittes wird eine Güte der Korrektur erreicht, die in dieser Hinsicht ohne weiteres mit der bekannten mechnischen Korrektur vergleichbar ist, ja diese sogar übertrifft und den Vorteil hat, daß die Korrekturkurve welche mit der erfindungsgemäßen Korrektureinrichtung durch Änderung des Multiplikationsfaktors und entsprechende Phasenverschiebung eingehalten werden kann, im Bedarfsfall durch entsprechende Porgrammierung an jede Fehlerkurve angepaßt werden kann. Durch entsprechende elektronische Maßnahmen ist es möglich, die gesamte durchführbare Korrektur beliebig groß zu halten, d. h. die Summe der Korrekturen kann in beiden Richtungen ein Vielfaches eines Maßstabinkrementes betragen. Dabei ist es durch entsprechende Schaltung möglich, in den Multiplikationsstufen in beiden Richtungen Verschiebungen der Phase in einem Gesamtausmaß von nur höchstens einem vollständigen Meßstabinkrement durchzuführen und bei weitergehenden Korrekturen wieder am Anfang zu beginnen. Eine Ausbildung der Korrektureinrichtung, die eine Phasenverschiebung des Analogsignales in ganz kleinen Schritten ermöglicht und dabei Korrekturen in beiden Richtungen um ein Vielfaches des Maßstabinkrementes zuläßt ist dadurch gekennzeichnet, daß als Multiplikationsschaltungen Vier-Quadranten-Multiplizierer verwendet werden, deren digitale Eingänge mit den Ausgängen eines Vor-Rückwärts-Ringzählers verbunden sind, bei dem die Anzahl der Zählstufen der Anzahl der Korrekturschritte zur Erzeugung einer Phasenverschiebung um einen vollständigen Signalzug der einzelnen Analogsignale entspricht und dessen Zählschritte von der Korrektureinrichtung nach dem Korrekturprogramm gesteuert werden. Bei dieser Schaltung ergibt sich z. B. bei Verwendung von Vier-Quadranten-Multiplizierern mit einem Eingang für das Analogsignal, einem Ausgang für das amplitudenmodulierte Analogsignal und zehn Digitaleingängen, die mit einem 10-bit-Ringzähler verbunden sind, die Möglichkeit der Phasenverschiebung in Stufen in der Größenordnung von 1/1024 des vollständigen Sinussignales. Bei herkömmlichen Unterteilungsschaltungen mit Teilerketten wird eine elektronische Maßstabunterteilung in der Größenordnung von 1/10 bis 1/20 und bei Interpolationsrechnern in der Größenordnung von 1/100 der Maßstabteilung erzielt. Der Ringzähler wird von der Steuereinheit gesteuert und bestimmt durch seinen momentanen Stand den momentan eingestellten Verstärkungsfaktor und damit die erhaltene Phasenverschiebung. Bei einem vollständigen Durchlauf des Ringzählers in einer Richtung entspricht die Summe der durchgeführten Korrekturen einem Maßstabinkrement, d. h. das korrigierte Analogsignal, das der Auswertung zugeführt wird, hat dann je nach Laufrichtung des Zählers einen vollständigen Signalzug mehr oder weniger enthalten als die durch Abtastung erhaltenen periodischen Meßsignale. Lineare Maßstabfehler können in einfacher Weise dadurch korrigiert werden, daß bei jedem n-ten Zählschritt eines dem Maßstab zugeordneten Absolutzählers, dessen Stand also dem unkorrigierten Abstand von einem Maßstabursprung entspricht, ein Steuersignal an den Ringzähler gegeben wird, der dadurch um einen Zählschritt vor- oder zurückschaltet und die Multiplikationsschaltung im Sinne einer entsprechenden Phasenverschiebung des Ausgangssignales steuert. Man kann ferner dem Maßstab in der Korrektureinrichtung programmierbare Speicher zur Realisierung einer wählbaren Korrekturkurve oder auch vorprogrammierte Speicher für eine gegebene Korrekturkurve zuordnen, wobei im letzteren Fall die Korrekturkurve bei einer Eichung des Meßsystemes an einen übergeordneten höher auflösenden und genaueren Meßsystem, etwa einem Laser-Interferometer, erstellt und in Festwertspeichern festgehalten werden kann. Zum Ausgleich des Ellipsen- und Phasenfehlers bei Drehgebern kann der Ringzähler auf den Umlauf des Drehgebers synchronisiert werden, so daß die durch die genannten Fehler auftretenden periodischen Signalverschiebungen ausgeglichen und dadurch die Meßgenauigkeit verbessert wird.

Nach einer bevorzugten Ausführungsform ist der Zähler über die relative Phasenlage der analogen Meßsignale berücksichtigende Anpassungsschaltungen mit den Multipliziereren für die phasenverschobenen analogen Meßsignale verbunden. Dies bedeutet, daß bei Verwendung von Vier-Quadranten-Multiplizierern am digitalen Eingang der Multiplizierer für die Sinussignale vielfach ein anderer Binärwert als am digitalen Eingang der Verstärker für Cosinussignale anliegen muß, um gleichsinnige Phasenverschiebungen der beiden Signale in gleicher Größe zu erzeugen. Aus diesem Grund werden die Anpassungsschaltungen verwendet, wodurch auch gleichzeitig mit einem einzigen Ringzähler das Auslangen gefunden wird.

Nach einer bevorzugten Ausführungsform enthalten die Anpassungsschaltungen programmierbare Festwertspeicher (PROM), in denen jedem Zählerstand des Ringzählers zugeordnet ein äquivalenter, die entsprechende Phasenverschiebung im korrigierten Ausgangssignal erzeugender, binärer Multiplikationsfaktor, insbesondere ein Sinus- bzw. Cosinuswert gespeichert ist, der bei dem entsprechenden Zählerstand des Ringzählers auf die zugeordneten Multiplizierer gelegt wird.

Die Verwendung von Anpassungsschaltungen hat den weiteren Vorteil, daß man Unsymmetrien der ursprünglich erhaltenen analogen Meßsignale, beispielsweise einen fehlerhaften Phasenabstand, durch Einstellung entsprechend ausgebildeter Anpassungsschaltungen ausgleichen kann, also auch eine Korrektur des Phasenfehlers ermöglicht wird.

In der Praxis hat sich eine Schaltung bewährt, bei der aus zwei analogen, z. B. um 90° phasenverschobenen Meßsignalen durch Invertierung des einen Meßsignales und doppelte Zufuhr der anderen vier Eingangssignale mit den relativen Phasenlagen 0°, 90°, 270° und 360° für vier Multiplikationsschaltungen gewonnen, jeweils die korrigierten 0° und 90° bzw. 270° und 360°-Analogsignale in Summierungsstufen zusammengeführt und die Summensignale dieser Summierungsstufen als zwei um 90° phasenverschobene, korrigierte Ausgangs-Analogsignale der Auswertung zugeführt werden.

Durch diese Signalverarbeitung werden Fehler ausgemerzt. Vor allem können wegen der Zusammenführung von je zwei Signalen unterschiedliche Verstärkungsfaktoren der Multiplikationsschaltungen eingestellt und für die Phasenverschiebung ausgenützt werden, so daß Phasenverschiebungen über den Verstärkungsfaktor möglich sind.

Weitere Einzelheiten und Vorteile des Erfindungsgegenstandes entnimmt man der nachfolgenden Zeichnungsbeschreibung.

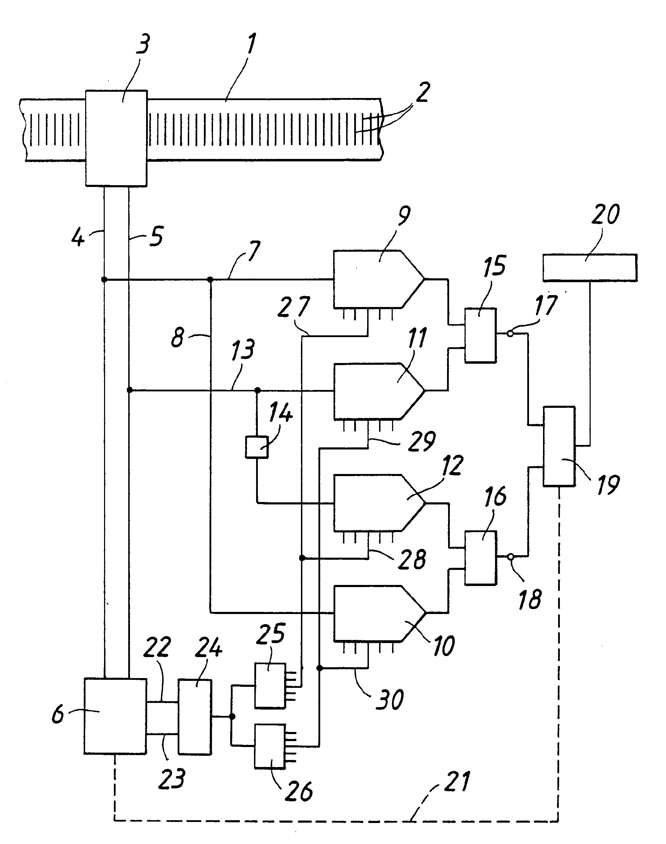

In der Zeichnung ist in vereinfachter Darstellungsweise ein Blockschaltschema eines Längenmeßsystems dargestellt.

Ein vorzugsweise in einem Gehäuse gekapselter Maßstab 1 besitzt eine aus Hell-Dunkelfeldern bestehende Meßteilung 2. Entlang des Maßstabes 1 ist über einen Mitnehmer eine Abtasteinheit 3 verstellbar, die durch den Maßstab und gegeneinander um Teilungsbruchteile versetzte Abtastgitter beleuchtete, photoelektrische Empfänger aufweist, an deren Ausgängen in ihrer Grundform sinusförmige, phasenverschobene analoge Meßsignale auftreten. Zwei um 90° phasenverschobene analoge Meßsignale, die auch durch paarweise Gegenschaltung von vier Abtasteinheiten erzeugt werden können, treten an den Ausgangsleitungen 4, 5 auf.

Die analogen Meßsignale werden einerseits einer Korrektursteuereinheit 6 zugeführt und anderseits zur weiteren Verarbeitung geleitet. Zu diesem Zweck werden die in der Leitung 4 geführten Sinussignale über Leitungen 7, 8 zwei Vier-Quadranten-Multiplizierern 9, 10 und die auf der Leitung 5 geführten Cosinussignale über Leitungen 13 unmittelbar einem Vier-Quadraten-Multiplizerer 11 und über eine Invertierungsstufe 14 einem weiteren Vier-Quadranten-Multiplizierer 12 zugeführt. Die Vier-Quadranten-Multiplizierer 9, 11, 12 und 10 liegen daher in der angegebenen Reihenfolge an Signalen mit der relativen Phasenlage 0°, 90°, 270° und 360° (= 0°).

Die Ausgänge der Multiplizierer 9, 11 und 10 und 12 sind paarweise zu Summierungsstufen 15, 16 geführt, an deren Ausgängen 17, 18 zwei korrgierte, um 90° phasenverschobene Analogsingale auftreten, die einer Verarbeitungseinrichtung 19, z. B. einer Teilerstufen, Trigger- und Impulsformerstufen, Zähleinrichtungen usw. bekannter Art enthaltenden Auswertungseinrichtung mit nachgeordneter Anzeigeeinrichtung 20 zugeführt werden. Die Auswertungseinrichtung kann auch einen Interpolationsrechner mit zugeordneten Speicher- und Zähleinrichtungen enthalten. In der Auswertungseinrichtung werden die Signale von den Anschlüssen 17, 18 so verarbeitet, wie sonst unmittelbar die Signale aus den Leitungen 4 und 5. Lediglich eine Vorverstärkerstufe der Auswertungseinrichtung kann wegen der Verwendung der Multiplizierer 9 bis 12 weggelassen werden.

Die Steuereinrichtung 6 kann einen Absolutzähler, also eine Vor-Rückwärtszähleinrichtung enthalten, deren momentaner Stand jeweils der Anzahl der zwischen einem Maßstabnullpunkt, z. B. einer Referenzmarke und der Abtasteinheit 3 liegenden Maßstabinkremente entspricht. Nach einer vorgegebenen Korrekturkurve werden an vorgegebenen Stellen des Maßstabes Korrekturschritte ausgelöst. Für die Auslösung dieser Korrekturschritte kann im einfachsten Fall bei linearen Maßstabfehlern eine Teilerschaltung vorgesehen sein, die bei jedem n-ten Zählschritt für den erwähnten Absolutzähler ein Korrektursignal auslöst. Weitere Möglichkeiten für die Auslösung von Korrekturschritten ergeben sich durch programmierbare oder vor programmierte Speicher, die über eine Steuereinrichtung, z. B. einen Mikrocomputer, abgefragt werden, so daß jeweils bei bestimmten Zählerständen des Absolutzählers ein Korrekturschritt ausgelöst wird. Die Korrektureinrichtung 6 kann wie über eine Leitung 21 angedeutet wurde, auch auf die Auswertungseinheit 19 synchronisiert werden und es ist auch möglich, einen in der Auswertungseinheit 19 verwendeten Mikrocomputer, der. z. B. in der Auswertungseinheit 19 als Interpolationsrechner arbeitet, zusätzlich für die Korrektureinrichtung 6 zu verwenden.

Die Korrektursignale haben je nachdem, ob eine Korrektur im Sinne einer scheinbaren Verlängerung oder Verkürzung der Meßteilung 2 vorgenommen werden soll, verschiedenes Vorzeichen. Die Korrektursignale werden daher vorzeichenrichtig über Leitungen 22, 23 als inkrementierende oder dekrementierende Zählsignale einem Ringzähler 24 zugeführt. Die Anzahl der Zählstufen dieses Ringzählers 24 entspricht der Anzahl der Korrekturschritte, nach deren Durchführung eine Phasenverschiebung der korrgierten Signale an den Ausgängen 17, 18 um einen vollständigen Signalzug vorgenommen ist. Der Ausgang des Zählers 24 ist mit zwei Anpassungsschaltungen 25, 26 verbunden, wobei die Anpassungsschaltung 25 über Leitungen 27, 28 an den Digitaleingängen der das Signussignal und das invertierte Cosinussignal führenden Multiplizierern 9 und 12 und die Anpassungsschaltung 25 über Leitungen 29, 30 an den Eingängen der Multiplizierer 10 und 11 liegt. Die Anpassungsschaltungen 25, 26 können programmierbare Festwertspeicher (PROM) enthalten, in denen jedem Zählerstand des Ringzählers 24 zugeordnet ein äquivalenter, die entsprechende Phasenverschiebung im korrigierten Ausgangssignal erzeugender Multiplikationsfaktor gespeichert ist, der ein Sinus- bzw. Cosinuswert für den dem Zählschritt zugeordneten Phasenverschiebungswinkel sein kann. Diese Faktoren werden entsprechend dem jeweiligen Zählerstand des Ringzählers 24 auf die zugeordneten Multiplizierer 9, 12 bzw. 10, 11 gelegt. Jede Veränderung des Zählerstandes um einen Schritt ändert auch den Multiplikationsfaktor der Multiplizierer 9 bis 12, also die Amplitude des am jeweiligen Multiplizierer auftretenden Ausgangssignales. Da die Ausgänge der Multiplizierer 9, 11 und 10, 12 paarweise zusammengeschaltet sind, wird die Amplitudenänderung zu einer Änderung der Phasenlage der Ausgangssignale an 17, 18 gegenüber der Phasenlage der Signale auf den Leitungen 4, 5 ausgenützt. Solange keine Korrektur vorgenommen wird, haben die Ausgangssignale an 17, 18 gegegenüber den Signalen an 4, 5 eine bleibende Phasenverschiebung von 45°. Bei Verwendung eines Ringzählers 24 mit 10-bit wird man auch Multiplizierer 9 bis 12 mit zehn Digitaleingängen verwenden, so daß ein Zählschritt des Zählers 24 eine Änderung der Phasenlage der Ausgangssignale um 1/1024 eines vollständigen Signalzuges bedingt. Durch Relativverschiebung bzw. Einstellung der Anpassungsschaltungen 25, 26 gegeneinander können auch fehlerhafte Phasenlagen der ursprünglichen Analogsignale korrigiert werden.

Die für ein Linearmeßsystem dargestellte Korrekturschaltung ist in gleichem Aufbau auch bei Winkelmeßsystemen einsetzbar, wobei dann an Stelle des Linearmaßstabes 1 eine einen entsprechenden Maßstab 2 aufweisende Scheibenskala abgetastet wird.

## Patentansprüche

1. Inkrementales Meßsystem mit
- einem Maßstab (1) mit einer inkrementalen Meßteilung (2),
- einer relativ zum Maßstab (1) verstellbaren Abtasteinheit (3) zur Abtastung der Meßteilung (2) und zur Erzeugung von analogen in ihrer Grundform sinusförmigen Meßsignalen entsprechend dem zurückgelegten Abtastweg
- Digitalisierungseinrichtungen, wie Trigger- und Impulsformerstufen (19) zur Erzeugung von digitalen Zählsignalen aus den analogen Meßsignalen,
- einer mit Zähleinrichtungen für die verstellrichtungsabhängige Zählung der digitalen Zählsignale versehenen Anzeige- oder Steuereinrichtung (20) und
- Multiplikationsschaltungen (9 bis 12) aufweisenden elektronischen Korrektureinrichtungen (6 bis 14, 22 bis 26) zur Korrektur zumindest von Teilungsfehlern der Meßteilung (2) und/oder Montagefehlern des Maßstabes (1) nach einem gespeicherten bzw. vorgegebenen Korrekturprogramm,
**dadurch gekennzeichnet, daß**
- die Korrektureinrichtungen (6 bis 14, 22 bis 26) zwischen der Abtasteinheit (3) und den Digitalisierungseinrichtungen (19) geschaltet sind,
- die Multiplikationsschaltungen (9 bis 12) der Korrektureinrichtungen (6 bis 14, 22 bis 26) die von der Abtasteinheit (3) erhaltenen analogen Meßsignale nach dem Fehlerkorrekturprogramm mit Phasenverschiebungen erzeugenden Korrekturfaktoren beaufschlagen,
- jeder einzelne Korrekturschritt gegenüber dem vorherigen Zustand eine Phasenverschiebung des analogen Ausgangssignales gegenüber dem analogen Eingangs-Meßsignal um nur einen Bruchteil eines vollständigen Signalzuges der Analogsignale erzeugt, welche Phasenverschiebung der Analogsignale bei einem Korrekturschritt auch kleiner ist als der einem Zählschritt der digitalen Zählsignale für die Auswertungseinrichtung (19, 20) äquivalente Phasenabstand, wobei die Summe der Korrekturschritte aber ein Vielfaches einer Signalzuglänge der Analogsignale betragen kann und
- die durch die Phasenverschiebung korrigierten analogen Ausgangssignale der Multiplikationsschaltungen (9 bis 12) an Stelle der Meßsignale den Digitalisierungseinrichtungen (19) zur weiteren Verarbeitung über die Zähleinrichtungen der Anzeige- oder Steuereinrichtung (20) zugeführt werden.

2. Meßsystem nach Anspruch 1, dadurch gekennzeichnet, daß als Multiplikationsschaltungen Vier-Quadranten-Multiplizierer (9 bis 12) verwendet werden, deren digitale Eingänge mit den Ausgängen eines Vor-Rückwärts-Ringzählers (24) verbunden sind, bei dem die Anzahl der Zählstufen der Anzahl der Korrekturschritte zur Erzeugung einer Phasenverschiebung um einen vollständigen Signalzug der einzelnen Analogsignale entspricht und dessen Zählschritte von der Korrektureinrichtung (6) nach dem Korrekturprogramm gesteuert werden.

3. Meßsystem nach Anspruch 1 oder 2, dadurch gekennzeichnet, daß der Ringzähler (24) über die relative Phasenlage der analogen Meßsignale berücksichtigende Anpassungsschaltungen (25, 26) mit den Multiplizierern (9 bis 12) für die phasenverschobenen analogen Meßsignale verbunden ist.

4. Meßsystem nach Anspruch 3, dadurch gekennzeichnet, daß die Anpassungsschaltungen (25, 26) programmierbare Festwertspeicher (PROM) enthalten, in denen jedem Zählerstand des Ringzählers (24) zugeordnet ein äquivalenter, die entsprechende Phasenverschiebung im korrigierten Ausgangssignal erzeugender binärer Multiplikationsfaktor, insbesondere ein Sinus- bzw. Cosinuswert gespeichert ist, der bei dem entsprechenden Zählerstand des Ringzählers auf die zugeordneten Multiplizierer (9, 12 bzw. 10, 11) gelegt wird.

5. Meßsystem nach den Ansprüchen 3 und 4, dadurch gekennzeichnet, daß die Anpassungsschaltungen (25, 26) zur Korrektur von Phasenfehlern der analogen Meßsignale zusätzlich einstellbar sind.

6. Meßsystem nach einem der Ansprüche 1 bis 5, dadurch gekennzeichnet, daß aus zwei analogen, z. B. um 90° phasenverschobenen Meßsignalen durch Invertierung des einen Meßsignales und doppelte Zufuhr des anderen vier Eingangssignale mit den relativen Phasenlagen 0°, 90°, 270° und 360° für vier Multiplikationsschaltungen (9 bis 12) gewonnen, jeweils die korrigierten 0° und 90° bzw. 270° und 360°-Analogsignale in Summierungsstufen (15, 16) zusammengeführt und die Summensignale dieser Summierungsstufen als zwei um 90° phasenverschobene, korrigierte Ausgangs-Analogsignale der Auswertung zugeführt werden.

## Revendications

1. Système de mesure incrémental comprenant
- une règle graduée (1) portant une graduation de mesure incrémentale (2),
- une unité d'exploration (3) pouvant se déplacer par rapport à la règle graduée (1), destinée à explorer la graduation de mesure (2) et produire des signaux de mesure analogiques, d'une forme de base sinusoïdale, qui correspondent à la distance d'exploration parcourue,
- des dispositifs de numérisation tels que des étages déclencheurs et formateurs d'impulsions (19) destinés à produire des signaux de comptage numériques à partir des signaux de mesure analogiques,
- un dispositif d'affichage et de commande (20) muni de dispositifs de comptage pour le comptage des signaux de comptage numériques en fonction du sens du déplacement, et
- des dispositifs de correction électroniques (6 à 14, 22 à 26) comprenant des circuits de multiplication (9 à 12) destinés à corriger au moins les erreurs de division de la graduation de mesure (2) et/ou les erreurs de montage de la règle graduée (1) en accord avec un programme de correction mémorisé ou prédéterminé,
caractérisé en ce que
- les dispositifs de correction (6 à 14, 22 à 26) sont intercalés entre l'unité d'exploratioon (3) et les dispositifs de numérisation (19),
- les circuits de multiplication (9 à 12) des dispositifs de correction (6 à 14, 22 à 26) appliquent aux signaux de mesure analogiques reçus en provenance de l'unité d'exploration (3) des coefficients de correction produisant des déphasages, en accord avec le programme de correction d'erreurs ;
- chaque pas de correction individuel par rapport à l'état précédent produit un déphasage du signal de sortie analogique par rapport au signal de mesure d'entrée analogique qui ne représente qu'une fraction d'un train complet des signaux analogiques, lequel déphasage des signaux analogiques produit dans un pas de correction est également plus petit que l'écart de phase équivalent, pour le dispositif d'analyse (19, 20), à un pas de comptage, la somme des pas de correction pouvant cependant atteindre un multiple d'une longueur de train des signaux analogiques, et
- les signaux analogiques de sortie des circuits de multiplication (9 à 12), corrigés par le déphasage, sont transmis aux dispositifs de numérisation (19) en remplacement des signaux de mesure, pour y subir un nouveau traitement, par l'intermédiaire du dispositif de comptage du dispositif d'affichage ou de commande (20).

2. Système de mesure selon la revendication 1, caractérisé en ce qu'on utilise, comme circuits de multiplication, des multiplicateurs à quatre quadrants (9 à 12) dont les entrées numériques sont connectées aux sorties d'un compteur annulaire avant-arrière (24), dans lequel le nombre des étages de comptage correspond au nombre des pas de correction pour produire un déphasage d'un train complet des signaux analogiques individuels, et dont les pas de comptage sont commandés par le dispositif de correction (6) en accord avec le programme de correction.

3. Système de mesure selon la revendication 1 ou 2,
caractérisé en ce que le compteur annulaire (24) est connecté aux multiplicateurs (9 à 12) agissant sur les signaux de mesure analogiques déphasés, par l'intermédiaire de circuits d'adaptation (25, 26) qui tiennent compte de la position de phase relative des signaux de mesure analogiques.

4. Système de mesure selon la revendication 3, caractérisé en ce que les circuits d'adaptation (25, 26) contiennent des mémoires mortes programmables (PROM), dans lesquelles, pour chaque état de comptage du compteur annulaire (24), est mémorisé un facteur de multiplication binaire, produisant le déphasage correspondant dans le signal de sortie corrigé, en particulier un sinus ou un cosinus, qui est transmis aux multiplicateurs correspondants (9, 12 ou 10, 11) en présence de l'état de comptage correspondant du compteur annulaire.

5. Système de mesure selon les revendications 3 à 4,
caractérisé en ce que les circuits d'adaptation (25, 26) peuvent être en supplément réglés pour la correction des erreurs de phase des signaux de mesure analogiques.

6. Système de mesure selon une des revendications 1 à 5,
caractérisé, en ce qu'à partir de deux signaux de mesure analogiques, par exemple déphasés de 90°, on obtient par inversion d'un signal de mesure et application double de l'autre, quatre signaux d'entrée présentant les positions de phase relatives 0°, 90°, 270° et 360°, pour quatre circuits de multiplication (9 à 12), les signaux analogiques corrigés à 0° et 90° et à 270° et 360° respectivement, sont regroupés dans des étages d'addition (15, 16) et les signaux sommes de ces étages d'addition sont envoyés à l'exploitation sous la forme de deux signaux de sortie analogiques corrigés, déphasés de 90°.

## Claims

1. An incremental measuring system comprising
- a scale (1) with incremental graduation (2),
- a scanning unit (3) movable relative to the scale (1) for scanning the graduation (2) and generating basically sinusoidal analog measuring signals corresponding to the distance travelled by the scanner,
- digitising means such as trigger and pulse-shaping stages (19) for generating digital counting signals from the analog measuring signals,
- a display or control device (20) comprising means for counting the digital counting signals in dependence on the direction of adjustment and
- electronic correcting means (6 - 14, 22 - 26) comprising multiplication circuits (9 to 12) for correction at least of errors in the graduation (2) and/or errors in fitting the scale (1) in accordance with a stored or preset correction program,
characterised in that
- the correcting means (6 - 14, 22 - 26) are connected between the scanning unit (3) and the digitising means (19),
- the multiplication circuits (9 - 12) in the correcting means (6 - 14, 22 - 26) apply correction factors generating phase shifts to the analog measuring signals received from the scanning unit (3), in accordance with the error-correction program,
- each individual correcting step, compared with the previous state, generates a phase shift of the analog output measuring signal relative to the input measuring signal by only a fraction of a complete analog-signal train, the phase shift of the analog signals during each correction step also being smaller than the phase interval equivalent to a counting step of the digital counting signals for the evaluation means (19, 20), but the sum of the correction steps can be a multiple of a length of an analog signal train, and
- the analog output signals of the multiplication circuits (9 - 12) corrected by the phase shift are supplied instead of the measuring signals to the digitising means (19) for further processing via the counting means in the display or control means (20).

2. A measuring system according to claim 1,
characterised in that the multiplication circuits used are four-quadrant-multipliers (9 - 12) whose digital inputs are connected to the outputs of a forward and backward ring counter (24), in which the number of counting stages corresponds to the number of correction steps for generating a phase shift of a complete train of the individual analog signals, and the counting steps are controlled by the correcting means (6) in accordance with the correction program.

3. A measuring system according to claim 1 or 2,
characterised in that the ring counter (24) is connected by matching circuits (25, 26), which take account of the relative phase position of the analog measuring signals, to the multipliers (9 - 12) for the phase-shifted analog measuring signals.

4. A measuring system according to claim 3,
characterised in that the matching circuits (25, 26) contain programmable read-only memories in which an equivalent binary multiplication factor generating the corresponding phase shift in the corrected output signal, is stored for each level of the ring counter (24), the factor more particularly being a sine or cosine value which is applied to the associated multiplier (9, 12 or 10, 11) when the ring counter reaches the corresponding level.

5. A measuring system according to claims 3 and 4,
characterised in that the matching circuits (25, 26) are additionally adjustable for correcting phase errors in the analog measuring signals.

6. A measuring system according to any of claims 1 to 5, characterised in that four input signals having the relative phase positions 0°, 90°, 270° and 360° for four multiplication circuits (9 - 12) are obtained from two analog measuring signals, phase-shifted e.g. by 90°, by inverting one measuring signal and doubling the other four input signals, and in each case the corrected 0° and 90° or 270° and 360° analog signals are combined in summation stages (15, 16) and the signals from the summation stages are supplied for evaluation in the form of two corrected output analog signals, phase-shifted by 90°.
